# EUROPÄISCHE PATENTSCHRIFT

(11) **EP 0 327 701 B1**
(45) Veröffentlichungstag und Bekanntmachung des Hinweises auf die Patenterteilung: **06.04.1994**
(21) Anmeldenummer: 88120254.3
(22) Anmeldetag: 05.12.1988
(51) Int. Cl.: H01R 13/424, B60D 1/62

(54) **Steckdose bzw. Stecker für mehrpolige elektrische Steckvorrichtung**
Socket respectively pin for a multipole electrical connecting device
Prise respectivement fiche pour un dispositif électrique multipolaire de connexion

(30) Priorität: 06.02.1988 DE 8801517 U
(43) Veröffentlichungstag der Anmeldung: 16.08.1989
(73) Patentinhaber: ERICH JÄGER GmbH & Co. KG, D-61350 Bad Homburg (DE)
(72) Erfinder: Rautenberg, Kurt, Eysseneckstrasse 31 D-6000 Frankfurt (DE)
(74) Vertreter: Keil, Rainer A., Dipl.-Phys. Dr.

(56) Entgegenhaltungen:
- EP-A- 0 147 956
- DE-A- 2 049 930
- DE-U- 7 812 822
- GB-A- 2 101 423

## Beschreibung

Die Erfindung bezieht sich auf eine Steckdose bzw. einen Stecker für mehrpolige Steckvorrichtungen, insbesondere für den elektrischen Anschluß von Kraftfahrzeuganhängern, mit einem in einem Gehäuse unterzubringenden Kontaktträgereinsatz, bestehend aus Kontaktträger mit axialen Durchbrechungen für die Aufnahme eines Fußabschnitts eines jeweiligen Kontaktes und einem Kontaktaufsatz mit Kontaktaufnahmelöchern für die aus dem Kontaktträger herausragenden Stift- oder Buchsenabschnitte der Kontakte, wobei Kontaktträger und Kontaktaufsatz durch lösbare Rast- oder Steckmittel miteinander zu verbinden sind, wobei im Umfangsbereich der Durchbrechungen auf der dem Kontaktaufsatz zugewandten Vorderseite des Kontaktträgers Rastzungen vorgesehen sind, welche das Einschieben der jeweiligen Kontakte in die Durchbrechungen unter radialem elastischem Ausweichen aus ihrer Ausgangsstellung, in welcher sie wenigstens teilweise in den Querschnittsbereich der Durchbrechung hineinragen, gestatten und beim vollständigen Durchschieben des jeweiligen Kontakts in seine zu arretierende Endstellung in radiale Aussparungen des Fußabschnittes des jeweiligen Kontakts derart einschnappen, daß sich eine rückwärtsweisende, die jeweilige Aussparung begrenzende Arretierungsschulter des jeweiligen Kontakts auf eine dem Kontaktaufsatz zugewandten Stirnfläche der eingeschnappten Rastzungen abstützt, und wobei der Kontaktaufsatz an den kontaktträgerseitigen Enden seiner Kontaktaufnahmelöcher Vertiefungen aufweist, in welche die Rastzungen in ihrer durch Einschnappen in die Aussparungen wieder eingenommene Ausgangsstellung beim Verrasten bzw. Zusammenstecken von Kontaktträger und Kontaktaufsatz gegen radiales Ausweichen aufzunehmen und zu sichern sind.

Aus der EP-A-0 147 956 ist ein derartiger Stecker bekannt.

Während die Rastzungen beim Einschieben der Kontakte in die entsprechenden Durchbrechungen jeweils radial nach außen gedrückt werden, schnappen sie dann und nur dann in die radialen Aussparungen, welche im Fußteil der Kontakte vorgesehen sind, in ihre Ausgangslage zurück, sobald die Kontakte vollständig in den Kontaktträger eingeschoben sind. Nur in dieser Ausgangslage kann dann der Kontaktträger vollständig mit dem Kontaktaufsatz zusammengesteckt werden, denn nur in dieser Ausgangslage passen die Rastzungen in die so bemessenen Vertiefungen, welche im Kontaktaufsatz für deren Aufnahme vorgesehen sind. Hierdurch ist gewährleistet, daß Kontaktträger und Kontaktaufsatz nur dann in ihre endgültige Rastposition zusammengesteckt werden können, wenn alle Kontakte vollständig in ihre Durchbrechungen eingeschoben sind. Im vollständig zusammengesteckten Zustand von Kontaktträger und Kontaktaufsatz sind die Kontaktzungen von der jeweiligen Wandung der Vertiefung, in welche sie eingeführt sind, derart umgeben bzw. abgestützt, daß sie - allenfalls bis auf ein geringes Spiel - nicht mehr nach radial außen ausweichen können. So stützten sich die Kontakte mit ihrer Arretierungsschulter zuverlässig gegen ein axiales Verschieben nach hinten auf den Stirnflächen der Rastzungen ab. Dadurch ist es bei vollständig zusammengestecktem Kontaktträger und Kontaktträgeraufsatz auch unter größerem Kraftaufwand nicht möglich, die Kontakte axial aus ihren Durchbrechungen nach hinten zu schieben, wenn ein Stecker in die Steckdose gesteckt wird, obgleich die Rastzungen, bevor sie in die Vertiefungen zu liegen kommen, aufgrund ihrer Materialbeschaffenheit und/oder Dimensionierung verhältnismäßig leicht radial ausweichen können und daher ein leichtes Einsetzen der Kontakte in die Durchbrechungen des Kontaktträgers gestattet wird. Damit ist auch das bspw. bei der Kontaktsicherung nach der DE-U 7 433 961 bestehende Problem beseitigt, bei welcher sich zu den Durchtrittsbohrungen einer Grundplatte einer elektrischen Steckverbindung konzentrisch liegende sektorförmige Schnapper bei axialer Beanspruchung der Kontakte verhältnismäßig leicht deformieren und daher die Kontakte nicht in ihrer axialen Position zuverlässig sichern können. Denn dort ist ein Ausweichen der Schnapper nach radial außen nicht nur beim anfänglichen Einstecken der Kontakte in die Bohrungen der Grundplatte, sondern auch bei axialer Beanspruchung auf die Kontakte in ihre Endposition in Gegenrichtung möglich. Durch die Querschnittsdimensionierung der Vertiefungen in der kontaktträgerseitigen Fläche des Kontaktaufsatzes wird also einerseits gewährleistet, daß ein vollständiges Zusammenstecken von Kontaktträger und Kontaktaufsatz nur dann möglich ist, wenn alle Kontakte vollständig in den Kontaktträger eingeschoben sind, da anderenfalls die aufgespreizten Rastzungen den Querschnitt der Vertiefungen überschreiten, andererseits wird durch Anlegen der Rastzungen an die Wandungen der Vertiefungen bei vollständig zusammengestecktem Kontaktträger und Kontaktaufsatz gewährleistet, daß die Rastzungen bei axialer Beanspruchung in dieser Lage nicht nach radial außen so weit ausweichen können, daß sie nach hinten durchgeschoben werden können.

Aufgabe der vorliegenden Erfindung ist es, eine Steckdose bzw. einen Stecker der eingangs genannten Art so auszubilden, daß bei zuverlässiger Sicherung des Kontaktsitzes eine einfache Montage ermöglicht ist.

Diese Aufgabe wird erfindungsgemäß dadurch gelöst, daß der Kontaktträger und der Kontaktaufsatz in einer Stellung miteinander vorverrastbar sind, in welcher die Stirnflächen der Rastzungen noch einen geringen Abstand von der die Vertiefung aufweisenden Rückseite des Kontaktaufsatzes haben.

Auf diese Weise ist es möglich, Kontaktträger und Kontaktaufsatz in vorverrastetem Zustand anzuliefern und erst an Ort und Stelle die erforderliche Bestückung mit den Kontakten vorzunehmen, ohne daß Kontaktträger und Kontaktaufsatz wieder voneinander getrennt werden müssen. Denn in der vorverrasteten Stellung behalten die Rastzungen ihre Möglichkeit, nach radial außen auszuweichen, noch bei.

Die Rastverbindung zwischen Kontaktträger und Kontaktaufsatz kann zu diesem Zweck mit Rastausnehmungen zusammenwirkende Raststifte zweier unterschiedlicher axialer Längen aufweisen. Dadurch treten zunächst nur die Raststifte größerer axialer Länge mit den Rastausnehmungen des Gegenstücks unter verhältnismäßig geringem Kraftaufwand in Eingriff, während zur vollständigen und endgültigen Verrastung von Kontaktträger und Kontaktaufsatz auch die Raststifte geringerer axialer Länge mit ihren zugehörigen Rastausnehmungen bei weiterem axialem Zusammendrücken von Kontaktträger und Kontaktaufsatz in Eingriff treten.

In besonderer Ausgestaltung des Erfindungsgedankens sind hierbei wenigstens zwei diametral einander gegenüberliegende Raststifte vorgesehen, welche größere axiale Länge haben als die übrigen Raststifte. Hierdurch wird eine zuverlässige Vorverrastung von Kontaktträger und Kontaktaufsatz in der erforderlichen Ausrichtung zueinander bei verhältnismäßig geringem Kraftaufwand gewährleistet.

Wenigstens vier je zu Paaren diametral einander gegenüberliegender Raststifte geringerer axialer Länge sorgen dann bei Aufwendung der entsprechend höheren Kraft für die endgültige Verrastung von Kontaktträger und Kontaktaufsatz in ihrer unmittelbar aneinandergrenzenden Position, in welcher auch die Rastzungen des Kontaktträgers in die Vertiefungen des Kontaktaufsatzes eingetaucht sind. Gegenüber der für die Vorverrastung erforderlichen Kraft ist die für die endgültige Verrastung entsprechend größer.

Die Rastverbindung zwischen Kontaktträger und Kontaktaufsatz kann auch über den Umfang von Kontaktaufsatz bzw. Kontaktträger verteilt angeordnete, radial elastisch ausweichende Rastlaschen mit einer Innenprofilierung realisiert sein, welche mit einer Außenprofilierung am Außenumfang des Kontaktträgers bzw. des Kontaktaufsatzes rastend zusammenwirkt. Dadurch können besondere Raststifte und Rastausnehmungen, welche den Platzbedarf für die Anordnung von Kontakten begrenzen, vermieden werden.

Hierbei kann insbesondere vorgesehen sein, daß die Innenprofilierung der Rastlaschen in zwei unterschiedlichen axialen Abständen von Kontaktträger und Kontaktaufsatz in die Außenprofilierung einrastet. Dadurch wird ebenfalls eine Vorverrastung von Kontaktträger und Kontaktaufsatz gewährleistet, in welcher die Rastzungen des Kontaktträgers noch nicht in die Vertiefungen des Kontaktaufsatzes eintauchen und für die Ausrüstung bzw. Nachrüstung mit Kontakten nach radial außen weggebogen werden können, um dann in die Aussparungen im Fußabschnitt der Kontakte in ihre Ausgangsstellung zurückzuschnappen, bevor dann Kontaktträger und Kontaktaufsatz in ihre endgültige axial zusammengeschobene Position miteinander verrastet werden.

Zu diesem Zweck können die Innenprofilierung der Rastlaschen und die Außenprofilierung je zwei im axialen Abstand voneinander befindliche, in Umfangsrichtung verlaufende Rippen aufweisen.

Um ein einfaches Zusammenfügen von Kontaktträger und Kontaktaufsatz in die erste und zweite Rastposition und ein umgekehrtes Lösen zu gewährleisten, haben die Rippen vorteilhafterweise im wesentlichen trapezförmigen Querschnitt und die angrenzend an die Rippen verbleibenden umlaufenden Nuten sind für die im wesentlichen spielfreie Aufnahme wenigstens einer der Rippen ausgebildet. Bei dieser Ausgestaltung ist zwar ein unerwünschtes Lösen von Kontaktträger und Kontaktaufsatz mit Sicherheit vermieden, ein gezieltes Lösen bei Anwendung des erforderlichen Kraftaufwandes für das radiale Ausbiegen der Rastlaschen jedoch ohne Schwierigkeiten möglich.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung.

Es zeigen:
- Fig. 1: eine Draufsicht des Kontaktträgers einer erfindungsgemäßen Steckdose,
- Fig. 2: eine rückwärtige Ansicht des Kontaktträgers nach Fig. 1,
- Fig. 2x: einen Teilschnitt X gemäß Fig. 2,
- Fig. 2z: einen Teilschnitt Z gemäß Fig. 2,
- Fig. 3: einen Schnitt des Kontaktträgers gemäß Linie III-III von Fig. 1,
- Fig. 4: eine Draufsicht des Kontaktaufsatzes einer erfindungsgemäßen Steckdose,
- Fig. 5: eine rückwärtige Ansicht des Kontaktaufsatzes nach Fig. 4,
- Fig. 6: einen Schnitt des Kontaktaufsatzes gemäß Linie VI-VI von Fig. 4,
- Fig. 6y: die Einzelheit Y von Fig. 6,
- Fig. 6z: die Einzelheit Z von Fig. 6,
- Fig. 7: einen Schnitt durch eine mit Buchsenabschnitt ausgestatteten Kontakt für eine erfindungsgemäße Steckdose,
- Fig. 8: einen Schnitt durch eine andere Ausführungsform eines Kontaktträgers eines erfindungsgemäßen Steckers,
- Fig. 8x: die Einzelheit X von Fig. 8,
- Fig. 8y: die Einzelheit Y von Fig. 8,
- Fig. 9: einen Schnitt durch einen zu dem Kontaktträger von Fig. 8 gehörenden Kontaktaufsatz,
- Fig. 9z: die Einzelheit Z von Fig. 9,
- Fig. 10a: im Schnitt eine Einzelheit von Kontaktträger und Kontaktaufsatz ähnlich den Einzelheiten von Fig. 8x und 9z bei vorverrastetem Kontaktträger und Kontaktaufsatz, und
- Fig. 10b: eine Einzelheit ähnlich Fig. 10a, wobei sich jedoch Kontaktträger und Kontaktaufsatz in ihrer endgültigen verrasteten Position befinden.

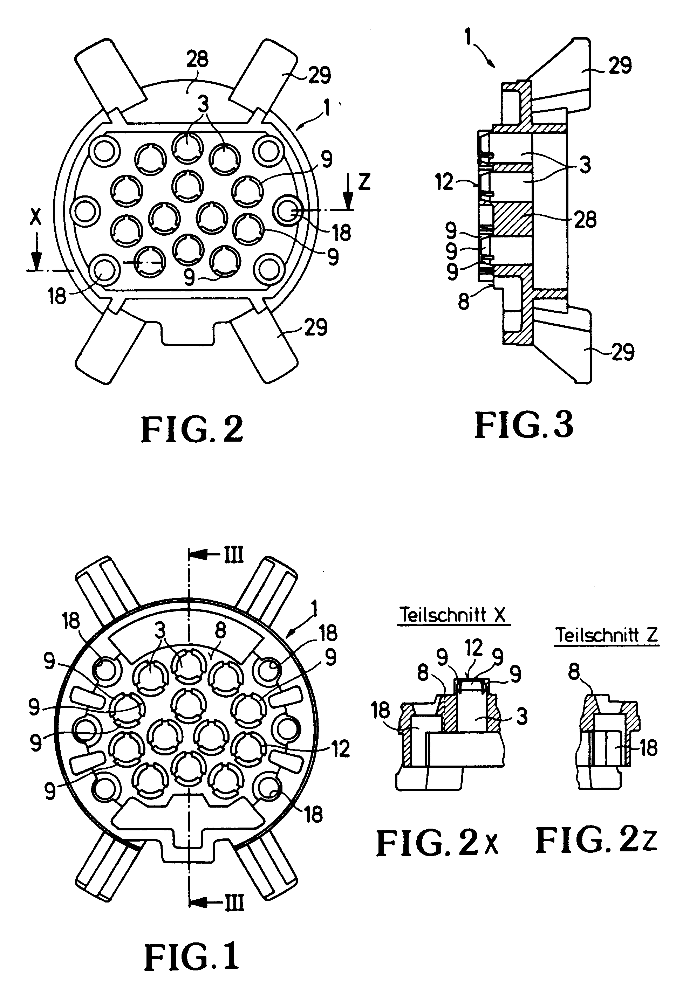

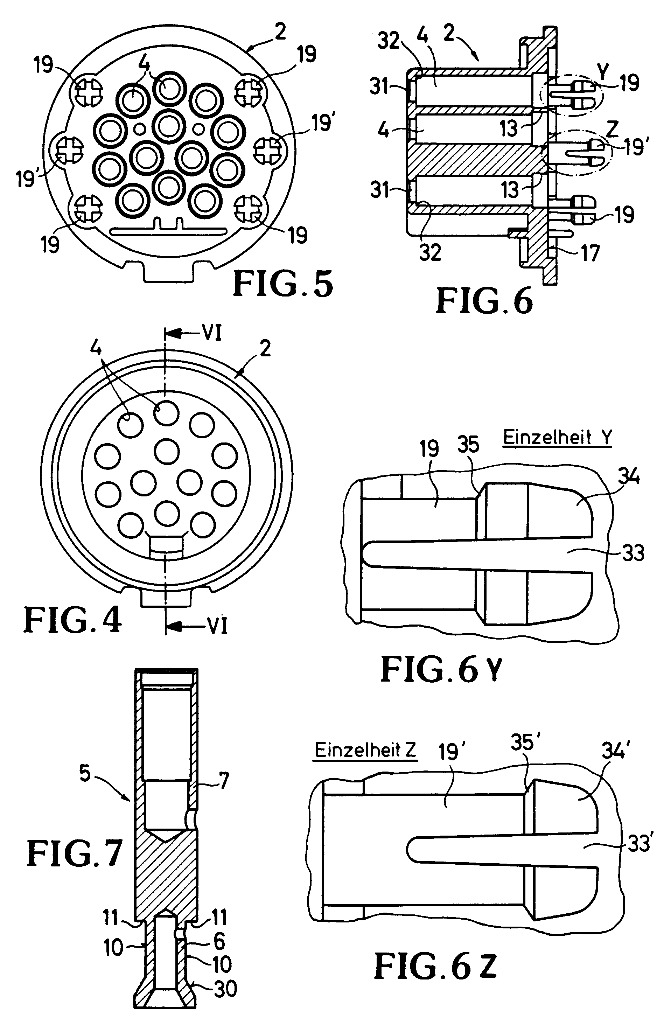

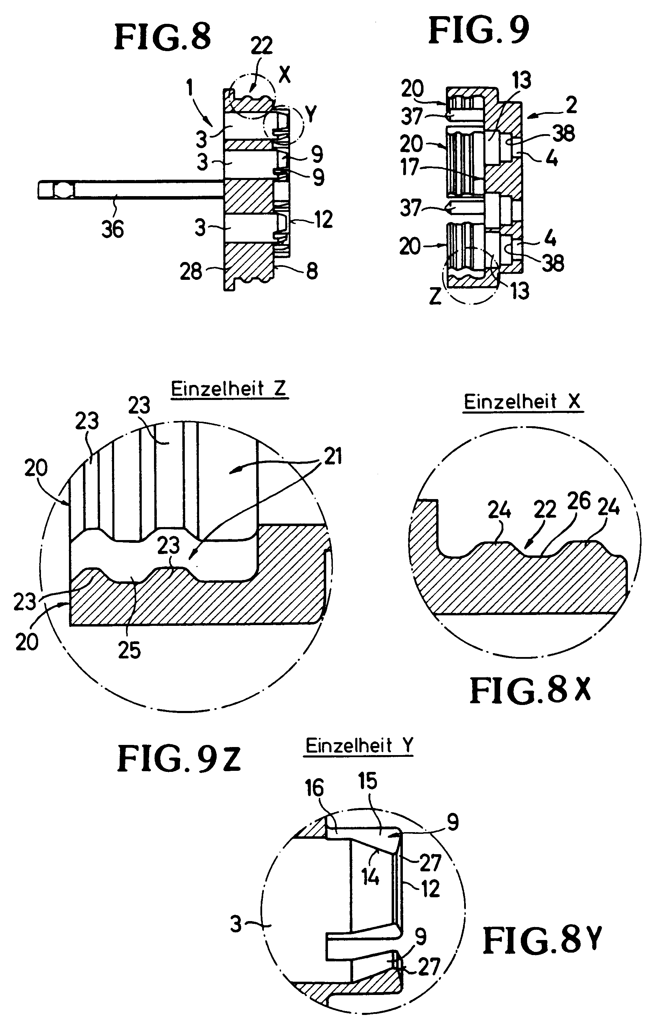

Eine erfindungsgemäße Steckdose hat z.B. einen Kontaktträger 1 gemäß den Fig. 1 bis 3. Er besteht aus einer Trägerplatte 28 mit vier nach rückwärts ragenden Beinen 29 zur Abstützung auf der Fläche, auf welcher die Steckdose zu befestigen ist. In der Trägerplatte 28 befinden sich Durchbrechungen 3 für die Aufnahme des Fußabschnitts 6 des jeweiligen Kontaktes 5 (vgl. Fig. 7), im vorliegenden Fall für eine maximal 13-polige Steckverbindung. Im Umfangsbereich der Durchbrechungen 3 sind auf der einem Kontaktaufsatz 2 (vgl. Fig. 4 bis 6) zugewandten Vorderseite 8 des Kontaktträgers 1 konzentrisch kreissektorförmige Rastzungen 9 vorgesehen. Die Rastzungen 9 ragen in ihrer in den Fig. 1 bis 3 dargestellten Ausgangsstellung (vgl. auch Fig. 8y) mit einem eine Auflaufschräge 14 aufweisenden Abschnitt 15 in den Querschnittsbereich der Durchbrechungen 3 hinein. Die Rastzungen 9 haben ferner benachbart der Vorderseite 8 des Kontaktträgers 1 einen verjüngten Wandungsbereich 16 mit dadurch erhöhter Flexibilität. Stirnseitig haben die Rastzungen 9 eine nach innen abfallende Schrägfläche 27 (vgl. Fig. 8y). Aufgrund ihrer Ausgestaltung und Anordnung gestatten die Rastzungen 9 das Einschieben der jeweiligen Kontakte 5 in die Durchbrechungen 3 von der Rückseite des Kontaktträgers 1 aus, also in Fig. 3 von rechts aus, unter radialem elastischem Ausweichen aus ihrer Ausgangsstellung, in welcher sie wenigstens teilweise in den Querschnittsbereich der Durchbrechungen 3 hineinragen. Beim vollständigen Durchschieben des jeweiligen Kontakts 5 in dessen zu arretierenden Endstellung schnappen die Rastzungen 9 in radiale Aussparungen 10 (vgl. Fig. 7) des Fußabschnitts 6 des jeweiligen Kontakts 5 derart ein, daß sich eine rückwärts weisende, die jeweilige Aussparung 10 begrenzende Arretierungsschulter 11 (vgl. Fig. 7) des jeweiligen Kontakts 5 auf eine dem Kontaktaufsatz 2 zugewandte Stirnfläche 12 der eingeschnappten Rastzungen 9 abstützt. Die Arretierungsschulter 11 ist im dargestellten Fall als vollständig umlaufende Schulter ausgebildet. Die Aussparungen 10 der Kontakte 5 gehen entsprechend Fig. 7 in ihrem rückwärtigen Bereich in eine umlaufende Kegelfläche 30 über, welche das Herausziehen der Kontakte 5 nach vorne aus dem Kontaktträger 1 bei nicht oder nicht vollständig aufgesetztem Kontaktaufsatz 2 trotz der eingeschnappten Rastzungen 9 gestattet. Über den Umfang der Trägerplatte 28 des Kontaktträgers 1 verteilt sind ferner eingangsseitig konisch verlaufende Rastausnehmungen 18 für die Aufnahme von Raststiften 19, 19′ vorgesehen, welche in Verbindung mit dem Kontaktaufsatz 2 noch näher erläutert werden.

Der Kontaktaufsatz 2 für eine erfindungsgemäße Steckdose hat gemäß den Fig. 4 bis 6 durchgehende Kontaktaufnahmelöcher 4 für die aus dem Kontaktträger 1 herausragenden Stift- oder Buchsenabschnitte 7 der Kontakte 5, wenn Kontaktträger 1 und Kontaktaufsatz 2 zu einem Kontaktträgereinsatz axial zusammengesteckt werden. Die Kontaktaufnahmelöcher 4 münden auf ihrer Vorderseite in Einstecköffnungen 31 für die Kontakte des zugehörigen Steckers unter Bildung von Anschlagsschultern 32 für die in den Kontaktaufnahmelöchern 4 angeordneten Kontakte 5. Auf seiner dem Kontaktträger 1 zugewandten Rückseite 17 gehen die Kontaktaufnahmelöcher 4 in erweiterte Vertiefungen 13 über, welche in ihrem Querschnitt so bemessen sind, daß die konzentrisch angeordneten kreissektorförmigen Rastzungen 9 dann und nur dann gerade aufgenommen und von der Wandungsfläche der Vertiefung 13 nach außen abgestützt werden, wenn sie in die radiale Aussparung 10 des jeweiligen Kontakts 5 eingeschnappt sind. Dadurch lassen sich Kontaktträger 1 und Kontaktaufsatz 2 axial nur vollständig zusammenstecken, wenn die jeweiligen Kontakte 5 vollständig mit ihrem Fußabschnitt 6 in den Kontaktträger 1 unter Einschnappen der Rastzungen 9 in die Aussparungen 10 eingeschoben sind und mit ihren Stift-oder Buchsenabschnitten 7 in die Kontaktaufnahmelöcher 4 hineinragen und mit ihrer vorderen Stirnfläche an den Anschlag schultern 32 anliegen.

Von der Rückseite 17 ragen - entsprechend der Anzahl der Rastausnehmungen 18 des Kontaktträgers 1 sechs Raststifte 19, 19′ nach hinten (in Fig. 6 nach rechts). Die Raststifte 19, 19′ sind mit einem Kreuzschlitz 33 versehen, so daß sich jeweils vier nach innen elastisch ausweichende Teilabschnitte ergeben. Die Raststifte 19, 19′ haben, wie insbesondere aus den Fig. 6y und 6z erkennbar ist, einen Kopfabschnitt 34, 34′, welcher endseitig abgerundet ist und rückwärtig in einer konischen Fläche 35, 35′ endet. Die Abrundung erleichtert das Einstecken der Raststifte 19, 19′ in die zugehörigen Rastausnehmungen 18 des Kontaktträgers 1, während die konischen Flächen 35, 35′ einen festen Rastsitz von Kontaktaufsatz 2 am Kontaktträger 1 gewährleisten, aber auch ein Lösen durch erhöhten Kraftaufwand gestatten. Wie aus den Fig. 5 und 6 ersichtlich, haben die beiden diametral einander gegenüberliegenden Raststifte 19′ eine größere axiale Länge als die übrigen vier je paarweise diametral einander gegenüberliegenden Raststifte 19. Beim Zusammenfügen von Kontaktträger 1 und Kontaktaufsatz 2 rasten daher zunächst lediglich die Raststifte 19′ in ihre entsprechenden Rastausnehmungen 18 des Kontaktträgers 1 ein. Da lediglich zwei Raststifte 19′ in ihrer Rastposition gedrückt werden müssen, ist der hierfür erforderliche Kraftaufwand verhältnismäßig gering. In dieser vorverrasteten Stellung haben Kontaktträger 1 und Kontaktaufsatz 2 noch einen solchen axialen Abstand voneinander, daß die Rastzungen 9 des Kontaktträgers 1 noch nicht in die Vertiefungen 13 des Kontaktaufsatzes 2 eingetaucht sind. Der Abstand wird dadurch bestimmt, daß sich in der vorverrasteten Stellung die weiteren kürzeren Raststifte 19 noch an dem Kontaktaufsatz 2 in den konischen Einführungsabschnitten der Rastausnehmungen 18 abstützen. In der vorverrasteten Stellung können daher die Rastzungen 9 noch radial ausweichen, wenn von rückwärts her Kontakte 5 in den Kontaktträger 1 eingeschoben werden. Es ist daher möglich, die Einheit aus Kontaktträger 1 und Kontaktaufsatz 2 in der vorverrasteten Stellung anzuliefern. Erst an Ort und Stelle erfolgt dann die Ausrüstung mit den Kontakten 5 unter Berücksichtigung der jeweils konkreten Verhältnisse bei der Montage der Steckdose. In die vollständige Rastposition werden Kontaktträger 1 und Kontaktaufsatz 2 dadurch zusammengedrückt, daß auch die restlichen vier Raststifte 19 in ihre entsprechenden Rastausnehmungen 18 eintauchen. Hierfür ist ein entsprechend größerer in Axialrichtung wirkender Kraftaufwand erforderlich. Wie zuvor geschildert, lassen sich Kontaktträger 1 und Kontaktaufsatz 2 nur in ihre endgültige miteinander verrastete Position drücken, wenn sämtliche Kontakte 5 vollständig in ihre vorgeschriebene Position eingeschoben sind, in welche die Rastzungen 9 in ihre Ausgangslage zurückgeschnappt sind und erst dadurch in die Vertiefungen 13 des Kontaktaufsatzes 2 eintauchen können.

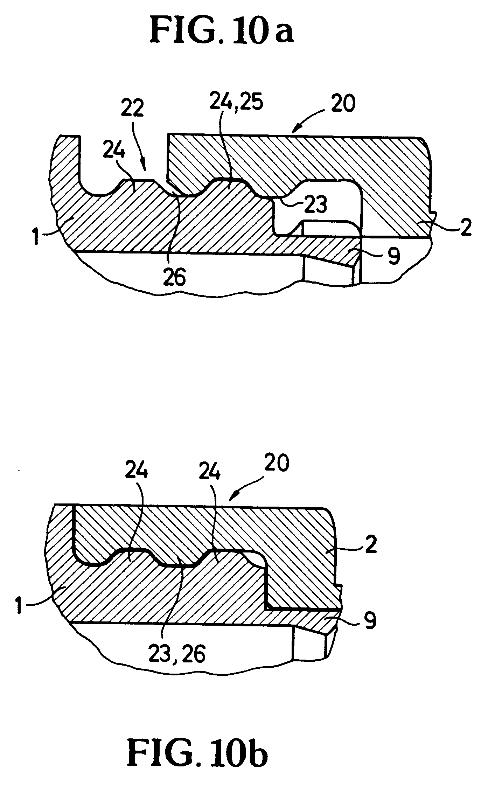

Bei der in den Fig. 8 bis 10b veranschaulichten Ausführungsform der Kombination von mit einer Zugentlastungsvorrichtung 36 ausgestattetem für einen erfindungsgemäßen Stecker bestimmten Kontaktträger 1 und Kontaktaufsatz 2 ist eine andere Art der Vor- und Endverrastung dieser beiden Bauteile gewählt. Hier ist, um für die Anordnung von Durchbrechungen 3 und Kontaktaufnahmelöchern 4 einen größeren Platz zu schaffen, am äußeren Umfang des Kontaktaufsatzes 2 eine Anordnung von radial ausweichenden Rastlaschen 20 geschaffen. Diese haben eine Innenprofilierung 21, welche mit einer Außenprofilierung 22 am Außenumfang des Kontaktträgers 1 zusammenwirkt. Innenprofilierung 21 und Außenprofilierung 22 haben jeweils zwei im Querschnitt etwa trapezförmige Rippen 23 bzw. 24, zwischen welchen jeweils eine entsprechend trapezförmige Nut 25 bzw. 26 freigehalten ist. Wie aus den Fig. 10a und 10b ersichtlich ist, sind die Rippen 23 und 24 gerade so bemessen, daß sie in die Nuten 25 bzw. 26 passen. Kontaktträger 1 und Kontaktaufsatz 2 können daher die in den Fig. 10a und 10b veranschaulichten zwei Rastpositionen einnehmen, nämlich die Vorverrastung gemäß Fig. 10a, in welcher die Rastzungen 9 des Kontaktträgers 1 noch nicht in die Vertiefungen 13 des Kontaktaufsatzes 2 eingetaucht sind, und die Endverrastung gemäß Fig. 10b, in welcher die Rastzungen 9 an den Wandungen in den Vertiefungen 13 gegen übermäßiges radiales Ausweichen abgestützt sind, so daß die Kontakte 5 beim Einstecken eines Steckers in die erfindungsgemäße Steckdose nicht nach hinten durchgeschoben werden können, da sich, wie beim ersten Ausführungsbeispiel, die Arretierungsschultern 11 der Kontakte 5 an den Stirnflächen 12 der Rastzungen 9 abstützen können. Es versteht sich, daß die Rastlaschen 20 auch umgekehrt am Kontaktträger 1 und das Außenprofil 22 am Kontaktaufsatz 2 vorgesehen sein können. Der Kontaktträger 2 weist im übrigen in diesem Fall auf seiner Rückseite noch Führungsstifte 37 auf, welche in entsprechende (nicht dargestellte) Öffnungen des Kontaktträgers 1 passen und beide Teile gegenseitig zentrieren. Auch hier ist eine umgekehrte Anordnung denkbar. Die Kontaktaufnahmelöcher 4 haben im Anschluß an die Vertiefungen 13 eine Anschlagschulter 38 für die Kontakte 5, deren Stift-oder Buchsenabschnitt entsprechend bemessen sein können.

### Bezugszeichenliste:

- 1: Kontaktträger
- 2: Kontaktaufsatz
- 3: Druchbrechungen
- 4: Kontaktaufnahmelöcher
- 5: Kontakte
- 6: Fußabschnitt
- 7: Stift- oder Buchsenabschnitt
- 8: Vorderseite des Kontaktträgers
- 9: Rastzungen
- 10: Aussparungen der Kontakte
- 11: Arretierungsschulter
- 12: Stirnfläche
- 13: Vertiefungen
- 14: Auflaufschräge
- 15: Abschnitt
- 16: Wandungsbereich
- 17: Rückseite des Kontaktaufsatzes
- 18: Rastausnehmungen
- 19, 19′: Raststifte
- 20: Rastlaschen
- 21: Innenprofilierung
- 22: Außenprofilierung
- 23: Rippen
- 24: Rippen
- 25: Nuten
- 26: Nuten
- 27: Schrägfläche
- 28: Trägerplatte
- 29: Beine
- 30: Kegelfläche
- 31: Einstecköffnungen
- 32: Anschlagschultern
- 33, 33′: Kreuzschlitze
- 34, 34′: Kopfabschnitte
- 35, 35′: konische Flächen
- 36: Zugentlastungsvorrichtung
- 37: Führungsstifte
- 38: Anschlagschulter

## Patentansprüche

1. Steckdose bzw. Stecker für mehrpolige Steckvorrichtung, insbesondere für den elektrischen Anschluß von Kraftfahrzeuganhängern, mit einem in einem Gehäuse unterzubringenden Kontaktträgereinsatz, bestehend aus einem Kontaktträger (1) mit axialen Durchbrechungen (3) für die Aufnahme eines Fußabschnittes (6) eines jeweiligen elektrischen Kontakts (5) und einem Kontaktaufsatz (2) mit Kontaktaufnahmelöchern (4) für die aus dem Kontaktträger (1) herausragenden Stift- oder Buchsenabschnitte (7) der Kontakte (5), wobei Kontaktträger (1) und Kontaktaufsatz (2) durch lösbare Rast- oder Steckmittel miteinander zu verbinden sind, wobei im Umfangsbereich der Durchbrechungen (3) auf der dem Kontaktaufsatz (2) zugewandten Vorderseite (8) des Kontaktträgers (1) Rastzungen (9) vorgesehen sind, welche das Einschieben der jeweiligen Kontakte (5) in die Durchbrechungen (3) unter radialem elastischem Ausweichen aus ihrer Ausgangsstellung, in welcher sie wenigstens teilweise in den Querschnittsbereich der Durchbrechungen (3) hineinragen, gestatten und beim vollständigen Durchschieben des jeweiligen Kontakts (5) in seine zu arretierende Endstellung in radiale Aussparungen (10) des Fußabschnitts (6) des jeweiligen Kontakts (5) derart einschnappen, daß sich eine rückwärts weisende, die jeweilige Aussparung (10) begrenzende Arretierungsschulter (11) des jeweiligen Kontakts (5) auf einer dem Kontaktaufsatz (2) zugewandten Stirnfläche (12) der eingeschnappten Rastzungen (9) abstützt, und wobei der Kontaktaufsatz (2) an den kontaktträgerseitigen Enden seine Kontaktaufnahmelöcher (4) Vertiefungen (13) aufweist, in welche die Rastzungen (9) in ihrer durch Einschnappen in die Aussparungen (10) wieder eingenommene Ausgangsstellung beim Verrasten bzw. Zusammenstecken von Kontaktträger (1) und Kontaktaufsatz (2) gegen radiales Ausweichen aufzunehmen und zu sichern sind, dadurch gekennzeichnet, daß der Kontaktträger (1) und der Kontaktaufsatz (2) in einer Stellung miteinander vorverrastbar sind, in welcher die Stirnflächen (12) der Rastzungen (9) noch einen geringen Abstand von der die Vertiefungen (13) aufweisenden Rückseite (17) des Kontaktaufsatzes (2) haben.

2. Steckdose bzw. Stecker nach Anspruch 1 , dadurch gekennzeichnet, daß die Rastverbindung zwischen Kontaktträger (1) und Kontaktaufsatz (2) mit Rastausnehmungen (18) zusammenwirkende Raststifte (19, 19') zweier unterschiedlicher axialer Längen aufweist.

3. Steckdose bzw. Stecker nach Anspruch 2, dadurch gekennzeichnet, daß wenigstens zwei diametral einander gegenüberliegende Raststifte (19') vorgesehen sind, deren axiale Länge größer ist als die axiale Länge der übrigen Raststifte (19).

4. Steckdose bzw. Stecker nach Anspruch 3, dadurch gekennzeichnet, daß wenigstens vier je zu Paaren diametral aneinander gegenüberliegende Raststifte (19) geringerer axialer Länge vorgesehen sind.

5. Steckdose bzw. Stecker nach einem der Ansprüche 1 bis 4, dadurch gekennzeichnet, daß die Rastverbindung über den Umfang von Kontaktaufsatz (2) bzw. Kontaktträger (1) verteilt angeordnete, radial elastisch ausweichende Rastlaschen (20) mit einer Innenprofilierung (21) aufweist, welche mit einer Außenprofilierung (22) am Außenumfang des Kontaktträgers (1) bzw. des Kontaktaufsatzes (2) rastend zusammenwirken.

6. Steckdose bzw. Stecker nach Anspruch 5, dadurch gekennzeichnet, daß die Innenprofilierung (21) der Rastlaschen (20) in zwei unterschiedlichen axialen Abständen von Kontaktträger (1) und Kontaktaufsatz (2) in der Außenprofilierung (22) einrastet.

7. Steckdose bzw. Stecker nach Anspruch 6, dadurch gekennzeichnet, daß die Innenprofilierung (21) der Rastlaschen (20) und die Außenprofilierung (22) je zwei im axialen Abstand voneinander befindliche in Umfangrichtung verlaufende Rippen (23, 24) aufweisen.

8. Steckdose bzw. Stecker nach Anspruch 7, dadurch gekennzeichnet, daß die Rippen (23, 24) im wesentlichen trapezförmigen Querschnitt haben und die angrenzend an die Rippen (23, 24) verbleibenden umlaufenden Nuten (25, 26) für die im wesentlichen spielfreie Aufnahme wenigstens einer der Rippen (23, 24) ausgebildet sind.

## Claims

1. A socket and pin for multipole connectors, more particularly for the electrical connections to towed vehicles, having a contact carrier insert to be accommodated in a housing and consisting of a contact carrier (1) with axial apertures (3) taking the foot section (6) of an associated electrical contact (5) and a contact attachment (2) with contact seating holes (4) for the pin or box sections (7) of contacts (5) protruding from the contact carrier (1), the contact carrier (1) and the contact attachment (2) being attachable to each other by releasable catches or pins, the frontal face (8) of the contact carrier (1) facing the contact attachment (2) having tongue-shaped catches (9) round the apertures (3), which catches allow the individual contacts (5) to enter the apertures (3) by yielding elastically in a radial direction from their initial positions in which they extend at least partially into the cross-sections of the apertures (3) and springing back into their final locking positions in radial recesses (10) in the foot sections (6) of the individual contacts (5) when the said contacts (5) have been fully inserted, with the effect that a rearwardly projecting locking shoulder (11) on the individual contact (5), which limits the size of the associated aperture (10), comes to rest on the endfaces(12) of the inwardly closed tongue-shaped catches (9) facing towards the contact attachment (2), whilst the ends of the contact seating holes (4) nearest the contact carrier in the contact attachment (2) have recesses (13) in which the tongue-shaped catches (9) are accommodated and secured against radial yielding, having sprung back into their initial positions as the contact carrier (1) and the contact attachment (2) were brought and locked together, characterized in that the contact carrier (1) and the contact attachment (2) can be locked together in am intermediate setting in which the endfaces (12) of the tongue-shaped catches (9) are still a short distance from the rear face (17) of the contact attachment (2) between the recesses (13).

2. A socket and pin as in Claim 1, characterized in that the locking joint between the contact carrier (1) and the contact attachment (2) incorporates two locking pins (19, 19') of different axial lengths interacting with locking recesses (18).

3. A socket and pin as in Claim 2, characterized in that at least two diametrically opposed locking pins (19') of greater axial length than the remainder of the locking pins (19) are provided.

4. A socket and pin as in Claim 3, characterized in that at least four locking pins (19) of smaller axial length, disposed in diametrically opposed pairs, are provided.

5. A socket and pin as in any of Claims 1 to 4, characterized in that the locking joint incorporates radially elastically yielding locking straps (20), spaced round the periphery of the contact attachment (2) and/or the contact carrier (1), and having an internal profile (21) interacting and interlocking with an external profile (22) on the outer periphery of the contact carrier (1) and/or the contact attachment (2).

6. A socket and pin as in Claim 5, characterized in that the internal profile (21) of the locking straps (20) interlocks with the external profile (22) at two different axial spacings between the contact carrier (1) and the contact attachment (2).

7. A socket and pin as in Claim 6, characterized in that the internal profile (21) of the locking straps (20) and the external profile (22) have two axially spaced peripherally extending ribs (23,24).

8. A socket and pin as in Claim 7, characterized in that the ribs (23,24) are substantially trapezoidal in cross-section, the grooves (25,26) remaining on either side of the ribs (23,24) being adapted to accommodate at least one of the ribs (23,24) with substantially zero clearance.

## Revendications

1. Prise femelle ou prise mâle pour un dispositif de connexion multipolaire, en particulier pour le branchement électrique de remorques de véhicule, comportant un ensemble porte-contacts à loger dans un boîtier composé d'un porte-contacts (1) avec des passages (3) axiaux qui reçoivent une partie de pied (6) d'un contact (5) électrique associé et une partie chapeau (2) avec des trous (4) de réception pour les parties (7) en forme de broches ou de douilles des contacts (5) qui font saillie par rapport au porte-contacts (1), le porte-contacts (1) et le chapeau (2) pouvant être retiés entre eux par des moyens d'encliquetage ou d'enfichage libérables, des languettes d'encliquetage (9) étant prévues dans la région du pourtour des passages (3) sur la face avant (8) du porte-contacts (1) tournée vers le chapeau (2), lesquelles languettes permettent l'engagement des contacts (5) concernés dans les passages (3) en s'écartant élastiquement dans la direction radiale de leur position d'origine dans laquelle elles font au moins partiellement saillie dans la région de la section des passages (3) et, lorsqu'on engage à fond le contact (5) concerné dans sa position finale, pénètrent dans des évidements (10) radiaux de la partie de pied (6) du contact (5) de manière telle qu'un épaulement (11) du contact (5) correspondant qui est tourné vers l'arrière et délimite l'évidement (10) prenne appui sur une surface frontale (12) tournée vers le chapeau (2) de la languette (9) encliquetée et le chapeau (2) présentant à l'extrémité côté porte-contacts de ses trous (4) de réception de contact des cavités (13) dans lesquelles les languettes (9), dans leur position d'origine reprise par encliquetage dans les évidements (10), sont reçues et bloquées de manière à éviter leur déplacement radial lors de l'encliquetage ou de l'assemblage du porte-contacts (1) et du chapeau (2), prise caractérisée par le fait que le porte-contacts (1) et le chapeau (2) peuvent être pré-encliquetés dans une position dans laquelle les surfaces frontales (12) des languettes (9) sont encore situées à une faible distance de la face arrière (17) du chapeau (2) présentant les cavités (13).

2. Prise femelle ou prise mâle selon la revendication 1, caractérisée par le fait que la liaison par encliquetage entre le porte-contacts (1) et le chapeau (2) comporte des doigts d'encliquetage (19, 19') de deux longueurs axiales différentes qui coopèrent avec des évidements d'encliquetage (18).

3. Prise femelle ou prise mâle selon la revendication 2, caractérisée par le fait qu'il est prévu au moins deux doigts d'encliquetage (19') diamètralement opposés dont la longueur axiale est supérieure à la longueur axiale des autres doigts d'encliquetage (19).

4. Prise femelle ou prise mâle selon la revendication 3, caractérisée par le fait qu'il est prévu au moins quatre doigts d'encliquetage (19) de longueur axiale plus faible qui sont disposés par paire dans des positions diamètralement opposées.

5. Prise femelle ou prise mâle selon l'une des revendications 1 à 4, caractérisée par le fait que la liaison par encliquetage comprend des pattes d'encliquetage (20) élastiques dans la direction radiale qui sont réparties sur le pourtour du chapeau (2) ou du porte-contacts (1) et présentent un profil intérieur (21) qui coopère avec un profil extérieur (22) sur le pourtour extérieur du porte-contacts (1) ou du chapeau (2).

6. Prise femelle ou prise mâle selon la revendication 5, caractérisée par le fait que le profil intérieur (21) des pattes d'encliquetage (20) s'engage par encliquetage dans le profil extérieur (22) dans deux positions axiales différentes par rapport au porte-contacts (1) et au chapeau (2).

7. Prise femelle ou prise mâle selon la revendication 6, caractérisée par le fait que le profil intérieur (21) des pattes d'encliquetage (20) et le profil extérieur (22) présentent chacun deux nervures (23, 24) qui s'étendent dans la direction périphérique à distance axiale l'une de l'autre.

8. Prise femelle ou prise mâle selon la revendication 7, caractérisée par le fait que les nervures (23, 24) ont une section sensiblement trapézoïdale et les rainures (25, 26) circulaires voisines des nervures (23, 24) sont agencées pour recevoir sensiblement sans jeu au moins l'une des nervures (23, 24).
